Europäisches Patentamt

European Patent Office

Office européen des brevets

(19)

(11) **EP 1 269 000 B1**

(12) **EUROPÄISCHE PATENTSCHRIFT**

(45) Veröffentlichungstag und Bekanntmachung des
Hinweises auf die Patenterteilung:
**02.11.2006 Patentblatt 2006/44**

(21) Anmeldenummer: **01929323.2**

(22) Anmeldetag: **05.04.2001**

(51) Int Cl.:
*F02D 41/20* (2006.01)    *F02M 51/06* (2006.01)
*H01L 41/04* (2006.01)

(86) Internationale Anmeldenummer:
**PCT/DE2001/001335**

(87) Internationale Veröffentlichungsnummer:
**WO 2001/077510 (18.10.2001 Gazette 2001/42)**

(54) **VERFAHREN UND VORRICHTUNG ZUM ANSTEUERN WENIGSTENS EINES KAPAZITIVEN STELLGLIEDES**

METHOD AND DEVICE FOR CONTROLLING AT LEAST ONE CAPACITIVE ACTUATOR

PROCEDE ET DISPOSITIF POUR COMMANDER UN ACTIONNEUR CAPACITIF

(84) Benannte Vertragsstaaten:
**DE FR**

(30) Priorität: **07.04.2000 DE 10017367**

(43) Veröffentlichungstag der Anmeldung:
**02.01.2003 Patentblatt 2003/01**

(73) Patentinhaber: **SIEMENS
AKTIENGESELLSCHAFT
80333 München (DE)**

(72) Erfinder: **SCHROD, Walter
93057 Regensburg (DE)**

(56) Entgegenhaltungen:
**DE-A- 19 714 607        DE-A- 19 805 184**

• **PATENT ABSTRACTS OF JAPAN vol. 015, no. 057
(M-1080), 12. Februar 1991 (1991-02-12) & JP 02
286852 A (TOYOTA MOTOR CORP), 27.
November 1990 (1990-11-27)**

**Beschreibung**

Verfahren und Vorrichtung zum Ansteuern wenigstens eines kapazitiven Stellgliedes.

Die Erfindung betrifft ein Verfahren zum Ansteuern wenigstens eines kapazitiven Stellgliedes, insbesondere eines Kraftstoffeinspritzventils einer Brennkraftmaschine. Die Erfindung betrifft auch eine Vorrichtung zur Durchführung dieses Verfahrens.

Bei der Ansteuerung eines kapazitiven Stellgliedes mittels resonanter Endstufen - die Kapazitäten der Ladekondensatoren und des Stellgliedes bilden mit der Induktivität der Umladespule einen Schwingkreis - haben die den Schwingkreis bildenden Leistungsbauteile bzw. deren Toleranzen einen großen Einfluss auf die Lade- und Entladezeiten des Stellgliedes, was bei bekannten Kraftstoffeinspritzventilen zu Rückwirkungen auf die Kraftstoff-Einspritzmenge führt.

Aus verbrennungstechnischer Sicht - und zur Erzielung geringster Kraftstoffeinspritzmengen - sind möglichst kurze Ladezeiten anzustreben, die jedoch zu hohen Geräuschemissionen führen. Deshalb werden die Ladezeiten geregelt und kurze Ladezeiten überwiegend in solchen Betriebsbereichen benutzt, in denen die durch sie verursachten Geräuschemissionen nicht störend empfunden werden, beispielsweise bei hohen Motordrehzahlen, von denen sie übertönt werden.

In der nicht vorveröffentlichten DE 199 44 734.9, bei welcher der Ladekondensator für eine maximale Ladedauer ausgelegt ist, wird vorgeschlagen, zur Verkürzung der Ladezeit den Schwingkreis auf einen Freilaufkreis umzuschalten.

Aus DE 196 32 872 A1 ist ein Verfahren und eine Vorrichtung zum Ansteuern wenigstens eines kapazitiven Stellgliedes bekannt, welches auf unterschiedliche Sollspannungswerte gelageladen werden kann, was eine variable Ladezeit bewirkt, die, ausgehend von einer durch Kapazitäten und Induktivitäten vorgegebenen maximalen Ladezeit durch vorzeitiges Abschalten verkürzt werden kann.

Aus DE 196 52 801 C1 ist ein Verfahren und eine Vorrichtung zum Ansteuern wenigstens eines kapazitiven Stellgliedes bekannt, welches mit einem konstanten Energiebetrag geladen wird, der trotz veränderlicher, temperaturabhängiger Stellgliedkapazität durch Variation der Ladespannung konstant gehalten wird.

Aus DE 198 05 184 A1 isr ein Verfahren und eine Vorrichtung zum ermitteln einer Temperatur eines piezoelektrischen Stellglieds bekannt, wobei das Stellglied getaktet aus einem von einem Spannungswandler mit Energie versorgten Energiespeicher geladen und ebenfalls getaktet wieder in den Energiespeicher entladen wird.

Weiter ist aus DE 197 14 607 A1 ein Verfahren und eine Vorrichtung zum Laden und Entladen eines piezoelektrischen Elements bekannt, wobei das Laden oder Entladen schrittweise in mehreren Stufen erfolgt. Dort erfolgt das Laden oder Entladen teils über ein für den Lade- oder Entladestrom im Wesentlichen als eine Resistanz wirkendes Element und teils über ein für den Lade- oder Entladestrom im Wesentlichen als Induktanz wirkendes Element.

Schließlich aus JP 022 86 852 eine Vorrichtung zum Ansteuern eines kapazitiven Stellglieds bekannt, bei dem die Lade- oder Entladezeit des kapazitiven Stellglieds in Abhängigkeit von der Motordrehzahl und der Motorlast gesteuert wird, wobei die Lade- oder Entladezeit zumindest bei niederen Drehzahl der Brennkraftmaschine verlängert wird.

Es ist Aufgabe der Erfindung, ein Verfahren zum Ansteuern eines kapazitiven Stellgliedes eines Kraftstoffeinspritzventils einer Brennkraftmaschine anzugeben, mittels welchem eine variable Ladezeit des Stellgliedes erzielt werden kann. Es ist auch Aufgabe der Erfindung, eine Vorrichtung zur Durchführung dieses Verfahrens zu schaffen.

Diese Aufgabe wird erfindungsgemäß bezüglich des Verfahrens durch die im Anspruch 1 genannten Merkmale und bezüglich der Vorrichtung zur Durchführung dieses Verfahrens durch die in Anspruch 3 genannten Merkmale gelöst.

Das erfindungsgemäße Verfahren besteht darin, daß zur Erzielung variabler Ladezeiten der während des Ladevorgangs des kapazitiven Stellgliedes in dem primären Resonanzkreis fließende Strom zur Verkürzung der Ladezeit in einen Freilaufkreis umgeleitet wird, wodurch der Ladevorgang wesentlich verkürzt wird. Zur Verlängerung der Ladezeit wird zunächst der in dem primären Resonanzkreis fließende Strom in den Freilaufkreis umgeleitet und anschließend der primäre Ladekreis wieder eingeschaltet, solange noch Strom im Freilaufkreis fließt. Damit läßt sich die Ladezeit in zwei oder mehrere Phasen gliedern, in welchen abwechselnd der primäre Schwingkreis und der Freilaufkreis eingeschaltet werden, wodurch die Ladezeit verlängert wird.

Die erfindungsgemäße Vorrichtung hat darüber hinaus den Vorteil, auf einfache Weise einen Kurzschluß- und einen Personenschutz zu ermöglichen. Dies ist von Bedeutung, da der Ausgang der Ansteuerschaltung direkt auf hohen Zwischenspannungen, zum Beispiel 80V, liegen kann und mit dem Kabelsatz der Brennkraftmaschine verbunden ist, bei dem ein Kurzschluß nicht auszuschließen ist.

Ein Ausführungsbeispiel einer Vorrichtung zur Durchführung des erfindungsgemäßen Verfahrens ist im folgenden unter Bezugnahme auf die schematische Zeichnung näher erläutert. Es zeigen:

Figur 1    die Schaltung eines Ausführungsbeispiels, und

Figur 2    ein Diagramm der Lade- und Entladeströme.

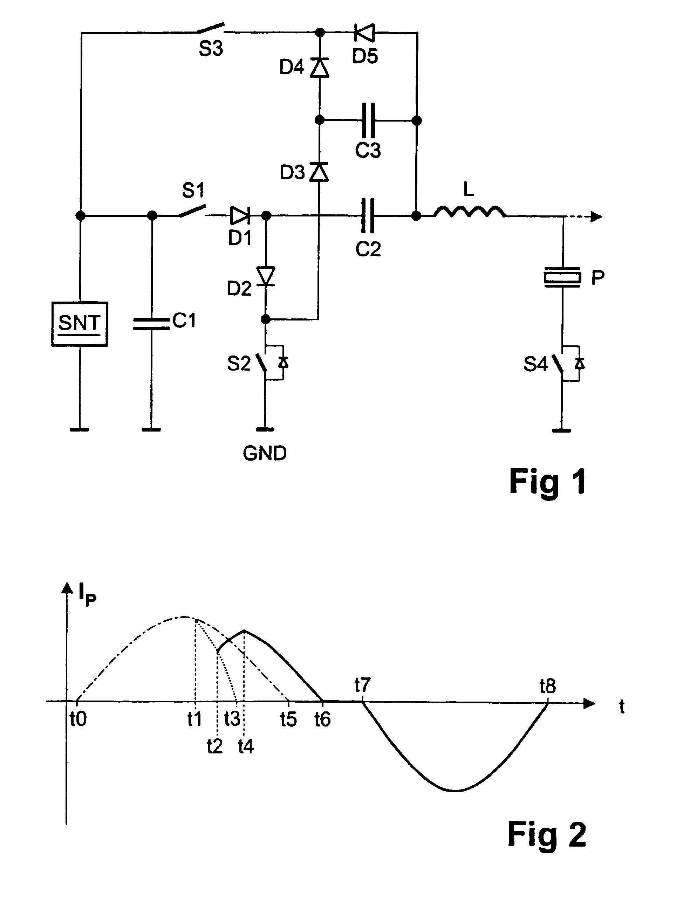

Figur 1 zeigt eine prinzipielle Schaltung einer erfindungsgemäßen Vorrichtung zum Ansteuern eines kapazitiven Stellgliedes P eines Kraftstoffeinspritzventils einer Brennkraftmaschine. Diese besteht aus einer beidseitig mit Masse GND (Bezugspotential) verbundenen Reihenschaltung einer Ladungsquelle, hier eines von einer Energiequelle SNT ladbaren Ladekondensators C1, eines Ladeschalters S1, einer ersten Diode D1, eines Umladekondensators C2, einer Umladespule L und eines oder mehrerer, zueinander parallelgeschalteter Reihenschaltungen aus je einem Stellglied P und einem Auswahlschalter S.

Der zum Ladeschalter S1 hin liegende Anschluß des Umladekondensators C2 ist über einen mit einer zweiten Diode D2 in Reihe liegenden Entladeschalter S2 mit Masse GND verbindbar.

Diese zweite Diode D2 ist in Richtung zur Masse GND stromleitend.

Die beiden Schalter S1 und S2 sowie weitere, später erwähnte Schalter werden von einer nicht dargestellten Steuerschaltung ST gesteuert. Wenn von Lade-, Entlade- oder Auswahlschaltern gesprochen wird, so sind darunter vorzugsweise Thyristoren, oder MOSFET's zu verstehen.

Vom Verbindungspunkt zwischen zweiter Diode D2 und Entladeschalter S2 führt eine Reihenschaltung einer dritten Diode D3 und eines Freilaufkondensators C3 zum Verbindungspunkt zwischen Umladekondensator C2 und Umladespule L. Parallel zum Freilaufkondensator C3 ist eine Reihenschaltung einer vierten und fünften Diode D4, D5 geschaltet, die in Richtung zu ihrem Verbindungspunkt hin stromleitend sind. Zwischen diesem Verbindungspunkt und dem Ladekondensator C1 ist ein weiterer Entladeschalter S3 angeordnet, der synchron mit dem Entladeschalter S2 leitend und nichtleitend gesteuert wird.

Die Kapazität des Ladekondensators C1 sei wesentlich größer als die Kapazität des Umladekondensators C2 und des Freilaufkondensators C3, wobei C2 und C3 ungefähr gleich groß sind, d.h., C2 kleiner, gleich oder größer C3 sein kann:

C1 >> C2, C3; C2 ≈ C3.

Die Kondensatoren C1 und C2 sind für eine mittlere Ladezeit bemessen, die zwischen einer minimal und einer maximal erreichbaren Ladezeit liegt.

Als Anfangsbedingungen dieser Schaltung seien der Lade- und der Umladekondensator C1 und C2 voll geladen, während der Freilaufkondensator C3 entladen sei. Sämtliche Schalter seien nichtleitend.

Figur 2 zeigt den Verlauf des durch das Stellglied während eines Ladevorgangs und eines Entladevorgangs fließenden Stromes $I_P$.

Das Laden eines Stellgliedes P erfolgt durch leitendsteuern des Ladeschalters S1 und des dem Stellglied zugeordneten Auswahlschalters S4 im Zeitpunkt t0 (Figur 2). Dabei schwingt die Ladung von den in Reihe liegenden Kondensatoren C1 und C2 mit einem Strom $I_P$ in Form einer halben Sinusschwingung (strichpunktierte Kurve in Figur 2) von diesen beiden Kondensatoren über die Umladespule L zum Stellglied P. In dieser Zeit, der Ladezeit, steigt die Stellgliedspannung auf einen bestimmten Wert, und das Stellglied P öffnet das Kraftstoffeinspritzventil.

Wenn der Strom $I_P$ im Zeitpunkt t5 zu Null wird, wird der Ladeschalter S1 wieder nichtleitend, und die Stellgliedspannung bleibt bis zum Beginn eines Entladevorgangs erhalten. Die Ladezeit betrug t5-t0. Der Freilaufkondensator C3 ist weiterhin entladen.

Zur Erzielung einer kürzeren bis minimalen Ladezeit wird der Ladeschalter S1 vorzeitig im Zeitpunkt t1 nichtleitend gesteuert. Dadurch bleibt die momentan im Umladekondensator C2 enthaltene Ladung konstant und es wird der Stromkreislauf des durch die Umladespule L weiter fließenden Stromes $I_P$ über das Stellglied P, den Auswahlschalter S4, die Inversdiode des Entladeschalters S2, die dritte Diode D3 und den Freilaufkondensator C3 zurück zur Umladespule L geschlossen, wodurch der Strom $I_P$ (punktierte Kurve) schnell abfällt und bereits im Zeitpunkt t3 zu Null wird. Durch den zunächst ungeladenen Freilaufkondensator C3, in welchem der Teil der in der Umladespule L gespeicherten Energie, der nicht im Stellglied P gespeichert ist, zwischengespeichert wird, ergibt sich ein Schwingkreis mit anderer, kleinerer Zeitkonstante, die durch die Kapazität des weiteren Kondensators C3 beeinflußt werden kann. Dadurch wird die Ladezeit t3-t0 des Stellgliedes schneller beendet.

Bei Umladezeiten mit Umschalten auf den Freilaufkondensator C3, die nahe der Zeit t5 -t0 (ohne Umschalten auf den Kondensator C3) sind, kann es zur Verpolung des Umladekondensators C2 kommen. Über die Dioden D2 und D3 wird der Kondensator C3 ebenfalls geladen. Beim Entladen des Stellgliedes P kann somit kein Ausgleichsstrom zwischen den Kondensatoren C2 und C3 fließen.

Soll die Ladezeit hingegen verlängert werden, so wird während des Freilaufbetriebs, beispielsweise zum Zeitpunkt t2, der Ladeschalter S1 wieder leitend gesteuert. Es fließt wieder ein Strom IP vom Ladekondensator C1 über den Umladekondensator C2 und die Umladespule L zum Stellglied. Wird dieser im Zeitpunkt t6 zu Null, so ist damit der Ladevorgang beendet.

Durch mehrmaliges Umschalten vom Ladestromkreis zum Freilaufkreis und wieder zurück kann die Ladezeit auf diese Weise wesentlich verlängert, d.h., in einem größeren Bereich bis zu einer maximalen Ladezeit variiert werden. Bei Kraftstoffeinspritzventilen, die in Dieselmotoren verwendet werden, ist mehr als eine zweifache Umschaltung nicht sinnvoll, aber bei anderen Anwendungen leicht realisierbar.

Beim Entladen des Stellgliedes P, im Zeitpunkt t7 beginnend, wird der Entladeschalter S2 und synchron mit ihm der weitere Entladeschalter S3 leitend gesteuert. Dadurch wird das Stellglied P über die Umladespule L zunächst in den Umladekondensator C2 entladen, bis die Summe der Spannungen am Umladekondensator C2 und am Freilaufkondensator C3 die Spannung am Ladekondensator C1 erreicht, woraufhin dann der Freilaufkondensator C3 in den wesentlich größeren Ladekondensator C1 entladen wird, bis kein Entladestrom -$I_P$ mehr fließt. Dadurch verlängert sich die Entladezeit geringfügig und endet zum Zeitpunkt t8.

Nach dem Ende des Entladevorgangs sind die Anfangsbedingungen für die nächste Stellgliedansteuerung wieder erfüllt: die Spannung am Umladekondensator C2 ist gleich der Spannung am Ladekondensator C1, und der weitere Kondensator C3 ist entladen.

Bei der beschriebenen Schaltung kann zum Personenschutz eine im Serienkondensator (Reihenschaltung aus C1 mit der Parallelschaltung von C2 und C3) maximal speicherbare Energiemenge

$$Cmax < \frac{1}{\dfrac{1}{C1} + \dfrac{1}{C2 + C3}}$$

festgelegt werden.

Emax = 0.5*V $^2$*Cmax; z.B.: Emax = 0.5*160$^2$V*10µF = 128mJ.

Ein Kurzschluß wird ebenfalls durch diese verfügbare Energie begrenzt.

## Patentansprüche

1. Verfahren zum Ansteuern wenigstens eines kapazitiven Stellgliedes (P), insbesondere eines Kraftstoffeinspritzventils einer Brennkraftmaschine, mittels eines das Stellglied (P) enthaltenden Ladeschwingkreises,
   **dadurch gekennzeichnet,**

   - **dass** zur Erzielung einer variablen Ladezeit (t3-t0 bis t6-t0) die Kapazität (C1+C2) der Ladungsquelle so bemessen ist, dass die Resonanzfrequenz des Ladeschwingkreises eine vorgegebene, mittlere Ladezeit (t5-t0) ergibt,
   - **dass** zur Erzielung einer minimalen (t3-t0) bis mittleren Ladezeit (t5-t0) der Stromfluss zu einem für diese Ladezeitbestimmten Zeitpunkt (t1) vom Ladeschwingkreis auf einen Freilaufkreis umgeschaltet wird, und
   - **dass** zur Erzielung der mittleren (t5-t0) bis maximalen Ladezeit (t6-t0) der Stromfluss zu einem für diese Ladezeit bestimmten ersten Zeitpunkt (t1) vom Ladeschwingkreis auf den Freilaufkreis umgeschaltet wird und zu einem für diese Ladezeit bestimmten zweiten Zeitpunkt (t2) vom Freilaufkreis wieder auf den Ladeschwingkreis umgeschaltet wird.

2. Verfahren nach Anspruch 1, **dadurch gekennzeichnet, dass** ab dem bestimmten Zeitpunkt (t2) mehrmals zwischen Freilaufkreis und Ladeschwingkreis hin- und hergeschaltet wird.

3. Vorrichtung zur Durchführung des Verfahrens nach Anspruch 1, mit einer Reihenschaltung aus einer Ladungsquelle aus einem von einer Energiequelle (SNT) ladbaren Ladekondensator (C1) und einem Umladekondensator (C2), einem Ladeschalter (S1), einer ersten Diode (D1), einer Umladespule (L) und dem Stellglied (P), und mit einem Entladeschalter (S2), der den Verbindungspunkt von erster Diode (D1) und Umladekondensator (C2) über eine zweite Diode (D2) mit Masse (GND) verbindet, und einer Steuerschaltung, die den Lade- und den Entladeschalter (S1 und S2) steuert,
   **dadurch gekennzeichnet ,**

   - **daß** vom Verbindungspunkt zwischen zweiter Diode (D2) und Entladeschalter (S2) eine Reihenschaltung einer dritten Diode (D3) und eines Freilaufkondensators (C3) zum Verbindungspunkt zwischen Umladekondensator (C2) und Umladespule (L) führt,
   - **daß** der Entladeschalter (S2) durch eine in Richtung zur zweiten Diode (D2) hin stromleitende Diode überbrückt ist,
   - **daß** parallel zum Freilaufkondensator (C3) eine Reihenschaltung aus einer vierten und einer fünften Diode (D4, D5), die in Richtung zu ihrem Verbindungspunkt hin stromleitend sind, geschaltet ist,
   - **daß** zwischen dem Verbindungspunkt von vierter und fünfter Diode (D4, D5) und dem Ladekondensator (C1) ein weiterer Entladeschalter (S3) angeordnet ist, welcher synchron mit dem Entladeschalter (S2) leitend und nichtleitend gesteuert wird, und
   - **daß** die Steuerschaltung den Ladeschalter (S1) zu einem für eine Ladezeit bestimmten Zeitpunkt (t1,t2) leitend oder nicht leitend steuert.

4. Vorrichtung nach Anspruch 3, **dadurch gekennzeichnet, daß** die Kapazität des Ladekondensators (C1) wesentlich größer als die Kapazität des Umladekondensators (C2) und des Freilaufkondensators (C3) gewählt ist, und daß die Kapazität des Umladekondensators (C2) größenmäßig der Kapazität des Freilaufkondensators (C3) entspricht

## Claims

1. Method for actuating at least one capacitive actuator element (P), in particular a fuel injection valve of an internal combustion engine, by means of a charging oscillatory circuit which contains the actuator element (P), **characterized**

   - **in that**, in order to bring about a variable charging time (t3-t0 to t6-t0), the capacitance (C1+C2) of the charging source is dimensioned in such a way that the resonance frequency of the charging oscillatory circuit gives rise to a predetermined, average charging time (t5-t0),

- **in that**, in order to bring about a minimum charging time (t3-t0) up to the average charging time (t5-t0), the flow current is switched over from the charging oscillatory circuit to a freewheeling circuit at a time (t1) determined for this charging time, and

- **in that**, in order to bring about the average charging time (t5-t0) up to the maximum charging time (t6-t0), the flow of current is switched over from the charging oscillatory circuit to the freewheeling circuit at a first time (t1) determined for this charging time and from the freewheeling circuit back to the charging oscillatory circuit at a second time (t2) determined for this charging time.

2. Method according to Claim 1, **characterized in that**, starting from the determined time (t2), switching backwards and forwards between the freewheeling circuit and the charging oscillatory circuit is performed repeatedly.

3. Device for carrying out the method according to Claim 1, having a series circuit composed of a charge source composed of a charging capacitor (C1) which can be charged from a power source (SNT), and a recharging capacitor (C2), a charging switch (S1), a first diode (D1), a recharging coil (L) and the actuator element (P), and having a discharging switch (S2) which connects the connection point for the first diode (D1) and recharging capacitor (C2) to ground (GND), and a control circuit which controls the charging and the discharging switches (S1 and S2) via a second diode, **characterized**

- **in that** a series circuit of a third diode (D3) and of a freewheeling capacitor (C3) leads from the connecting point between the second diode (D2) and discharging switch (S2) to the connecting point between the recharging capacitor (C2) and recharging coil (L),

- **in that** the discharging switch (S2) is bypassed by a diode which conducts current in the direction of the second diode (D2) ,

- **in that** a series circuit composed of fourth and fifth diodes (D4, D5), which conduct current in the direction of their connecting point, is connected in parallel with the freewheeling capacitor (C3),

- **in that** a further discharging switch (C3) which is switched on and off in synchronism with the discharging switch (S2) is arranged between the connecting point of the fourth and fifth diodes (D4, D5) and the charging capacitor (C1), and

- **in that** the control circuit switches the charging switch on and off at a time (t1, t2) determined for a charging time.

4. Device according to Claim 3, **characterized in that** the capacitance of the charging capacitor (C1) is selected to be significantly greater than the capacitance of the recharging capacitor (C2) and of the freewheeling capacitor (C3), and **in that** the capacitance of the recharging capacitor (C2) corresponds in magnitude to the capacitance of the freewheeling capacitor (C3).

**Revendications**

1. Procédé d'excitation d'un actionneur capacitif (P), notamment d'une soupape d'injection de carburant d'un moteur à combustion interne, au moyen d'un circuit résonant de charge contenant l'actionneur (P),
**caractérisé en ce que**

- pour obtenir un temps de charge variable (t3-t0 à t6-t0), la capacité (C1+C2) de la source de charge est dimensionnée de façon telle qu'il résulte un temps de charge moyen prédéfini (t5-t0) de la fréquence de résonance du circuit résonant de charge,

- pour obtenir un temps de charge minimal (t3-t0) à moyen (t5-t0), à un moment (t1) déterminé pour le temps de charge du circuit résonant de charge, le flux de courant est inversé sur un circuit de régime libre, et

- pour obtenir le temps de charge moyen (t5-t0) à maximal, (t6-t0) à un premier moment (t1) déterminé pour ce temps de charge, le flux de courant est inversé du circuit résonant de charge sur le circuit de régime libre et à un deuxième moment déterminé (t2), il est à nouveau inversé du circuit de régime libre sur le circuit résonant de charge.

2. Procédé selon la revendication 1, **caractérisé en ce qu'**à partir du moment déterminé (t2), on commute plusieurs fois entre le circuit de régime libre et le circuit résonant de charge.

3. Dispositif de mise en oeuvre du procédé selon la revendication 1, comportant un couplage en série composé d'une source de charge , d'un condensateur de charge (C1) pouvant être chargé par une source d'énergie (SNT) et d'un condensateur d'inversion de charge (C2), d'un interrupteur de charge (S1), d'une première diode (D1), d'une bobine d'inversion de charge (L) et de l'actionneur (P), et comportant un interrupteur de décharge (S2), qui relie le point de liaison d'une première diode (D1) et du condensateur d'inversion de charge (C2) par l'intermédiaire d'une deuxième diode (02) avec la masse (GND) , et d'un circuit de commande qui commande l'interrupteur de charge et l'interrupteur de décharge (S1 et S2),
**caractérisé en ce que**

- le point de liaison entre la deuxième diode (D2) et l'interrupteur de décharge (S2) conduit un couplage en série d'une troisième diode (D3) et d'un condensateur de régime libre (C3) vers le point de liaison entre le condensateur d'inversion de charge (C2) et la bobine d'inversion de charge (L),
- l'interrupteur de décharge (S2) est court-circuité par une diode conductrice de courant en direction de la deuxième diode (D2),
- un couplage en série composé d'une quatrième et d'une cinquième diode (D4, D5) qui est conducteur de courant en direction de son point de liaison est monté parallèlement au condensateur de régime libre (C3) ,
- un interrupteur de décharge supplémentaire (S3) qui est commandé en mode conducteur et en mode non conducteur, de façon synchrone avec l'interrupteur de décharge(S2) est disposé entre le point de liaison de la quatrième et de la cinquième diode (D4, D5) et le condensateur de charge (C1),
- le circuit de commande commande l'interrupteur de charge (S1) en mode conducteur ou non conducteur, à un moment (t1, t2) déterminé pour un temps de charge.

4. Dispositif selon la revendication 3, **caractérisé en ce que** la capacité du condensateur de charge (C1) est choisie pour être nettement supérieure à la capacité du condensateur d'inversion de charge (C2) et du condensateur de régime libre (C3), et **en ce que** la capacité du condensateur d'inversion de charge (C2) correspond au niveau de sa dimension à la capacité du condensateur de régime libre (C3).

**Fig 1**

**Fig 2**